(19) Europäisches Patentamt
European Patent Office
Office européen des brevets

(11) **EP 3 691 004 A1**

(12) **EUROPEAN PATENT APPLICATION**
published in accordance with Art. 153(4) EPC

(43) Date of publication:
**05.08.2020 Bulletin 2020/32**

(21) Application number: **18861179.2**

(22) Date of filing: **20.09.2018**

(51) Int Cl.:
*H01M 4/62* (2006.01)       *C08F 220/56* (2006.01)
*H01G 11/38* (2013.01)      *H01M 2/16* (2006.01)
*H01M 4/13* (2010.01)       *H01M 4/139* (2010.01)
*H01M 10/0566* (2010.01)

(86) International application number:
**PCT/JP2018/034911**

(87) International publication number:
**WO 2019/065471 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2017 JP 2017188837**

(71) Applicant: **Zeon Corporation**
**Tokyo 100-8246 (JP)**

(72) Inventor: **ADACHI Yusuke**
**Tokyo 100-8246 (JP)**

(74) Representative: **Maiwald Patent- und Rechtsanwaltsgesellschaft mbH Engineering Elisenhof Elisenstrasse 3 80335 München (DE)**

(54) **ELECTROCHEMICAL-ELEMENT BINDER COMPOSITION, ELECTROCHEMICAL-ELEMENT SLURRY COMPOSITION, ELECTROCHEMICAL-ELEMENT FUNCTIONAL LAYER, AND ELECTROCHEMICAL ELEMENT**

(57)    Provided is a binder composition for an electrochemical device that can improve cycle characteristics of an electrochemical device including a functional layer that is formed using a produced slurry composition for an electrochemical device. The binder composition for an electrochemical device contains a polymer A and a solvent. The polymer A includes a nitrogen-substituted amide group-containing monomer unit and a hydroxyl group-containing monomer unit. The content of the nitrogen-substituted amide group-containing monomer unit in the polymer A is not less than 10 mass% and not more than 80 mass%, and the content of the hydroxyl group-containing monomer unit in the polymer A is not less than 10 mass% and not more than 70 mass%.

**Description**

TECHNICAL FIELD

The present disclosure relates to a binder composition for an electrochemical device, a slurry composition for an electrochemical device, a functional layer for an electrochemical device, and an electrochemical device.

BACKGROUND

Non-aqueous secondary batteries (hereinafter, also referred to simply as "secondary batteries"), such as lithium ion secondary batteries, and capacitors, such as electric double-layer capacitors and lithium ion capacitors, are examples of electrochemical devices that are conventionally used in a wide variety of applications.

Non-aqueous secondary batteries have characteristics such as compact size, light weight, high energy-density, and the ability to be repeatedly charged and discharged, and are used in a wide variety of applications. Consequently, in recent years, studies have been made to improve electrodes and other battery components with the aim of achieving even higher non-aqueous secondary battery performance.

An electrode for a secondary battery, such as a lithium ion secondary battery, generally includes a current collector and an electrode mixed material layer that is formed as a functional layer on the current collector. The electrode mixed material layer is formed, for example, by applying, onto the current collector, a composition in the form of a slurry in which an electrode active material, a binder composition containing a polymer serving as a binder, and so forth are dispersed in a dispersion medium, and drying the applied composition.

In recent years, attempts have been made to improve slurry compositions for electrodes and binder compositions for electrodes used in the formation of electrode mixed material layers in order to further improve secondary battery performance.

There is generally demand for improving battery performance in terms of cycle characteristics and so forth.

For example, Patent Literature (PTL) 1 proposes a technique for increasing close adherence between an electrode mixed material layer and a metal current collector and for improving cycle characteristics of a secondary battery by using, as a binder composition for an electrode in secondary battery production, an acrylic water dispersion for an electrochemical cell containing: a water-soluble resin (a) obtained through polymerization of a monomer group including an unsaturated carboxylic acid polymerizable monomer and (meth)acrylamide; and organic particles (b).

In another example, PTL 2 proposes, as a binder for an electrode in production of a secondary battery, an aqueous binder for an electrode composition containing water and a polymer that includes a structural unit derived from an acid-containing monomer and a structural unit derived from a hydroxyl group-containing monomer, and that has a specific acid value. PTL 2 also discloses an aqueous binder containing a polymer obtained through polymerization of a mixture containing 2-hydroxyethyl acrylate and acrylic acid or 2-carboxyethyl acrylate as a specific aqueous binder for an electrode composition that can provide sufficient peel strength (close adherence) between an electrode mixed material layer and a current collector and can improve cycle characteristics of a secondary battery.

Note that in the present specification, "(meth)acryl" is used to indicate "acryl" and/or "methacryl", and "(meth)acrylo" is used to indicate "acrylo" and/or "methacrylo".

CITATION LIST

Patent Literature

    PTL 1: JP 2012-151108 A
    PTL 2: JP 2015-195114 A

SUMMARY

(Technical Problem)

However, there is room for improvement in terms of further improving cycle characteristics of a secondary battery produced using an electrode that is formed using a conventional binder composition such as described above.

Accordingly, one objective of the present disclosure is to provide a slurry composition for an electrochemical device with which it is possible to form a functional layer for an electrochemical device that can cause an electrochemical device to display excellent cycle characteristics, and also to provide a binder composition for an electrochemical device that can be used to produce this slurry composition.

Another objective of the present disclosure is to provide a functional layer for an electrochemical device that can cause an electrochemical device to display excellent cycle characteristics, and also to provide an electrochemical device including this functional layer for an electrochemical device.

(Solution to Problem)

Through extensive investigation, the inventor discovered that by using a binder composition containing a specific polymer A and a solvent, it is possible to provide a binder composition for an electrochemical device that can be used to produce a slurry composition for an electrochemical device with which a functional layer that can improve cycle characteristics of an electrochemical device can be formed, and in this manner completed the present disclosure.

Specifically, the present disclosure aims to advantageously solve the problem set forth above by disclosing a binder composition for an electrochemical device comprising a polymer A and a solvent, wherein the polymer A includes a nitrogen-substituted amide group-containing monomer unit and a hydroxyl group-containing monomer unit, content of the nitrogen-substituted amide group-containing monomer unit in the polymer A is not less than 10 mass% and not more than 80 mass%, and content of the hydroxyl group-containing monomer unit in the polymer A is not less than 10 mass% and not more than 70 mass%. By using a binder composition for an electrochemical device that contains a solvent and a polymer A including a specific amount of a nitrogen-substituted amide group-containing monomer unit and a specific amount of a hydroxyl group-containing monomer unit in this manner, it is possible to improve cycle characteristics of an electrochemical device including a functional layer that is formed using a produced slurry composition for an electrochemical device.

Note that the phrase "includes a monomer unit" as used in the present disclosure means that "a repeating unit derived from the monomer is included in a polymer obtained using the monomer".

Also note that "fractional content of a nitrogen-substituted amide group-containing monomer unit" and "fractional content of a hydroxyl group-containing monomer unit" referred to in the present disclosure can be measured by a nuclear magnetic resonance (NMR) method such as $^1$H-NMR.

In the presently disclosed binder composition for an electrochemical device, the polymer A preferably has a weight-average molecular weight of not less than 50,000 and not more than 5,000,000. When the weight-average molecular weight of the polymer A is not less than 50,000 and not more than 5,000,000, solubility of the polymer A in a solvent can be improved, water content of a functional layer formed using a produced slurry composition for an electrochemical device can be lowered, and thus cycle characteristics of an electrochemical device including a functional layer that is formed using the produced slurry composition for an electrochemical device can be further improved.

Note that the "weight-average molecular weight of a polymer A" referred to in the present disclosure can be measured by a method described in the EXAMPLES section of the present application.

In the presently disclosed binder composition for an electrochemical device, a substituent of the nitrogen-substituted amide group-containing monomer preferably includes a cyclic structure. When the substituent of the nitrogen-substituted amide group-containing monomer includes a cyclic structure, cycle characteristics of an electrochemical device including a functional layer that is formed using a produced slurry composition for an electrochemical device can be improved.

The presently disclosed binder composition for an electrochemical device preferably further comprises a polymer B, wherein the polymer B includes either or both of an aliphatic conjugated diene monomer unit and a linear alkylene structural unit. When the polymer B includes either or both of an aliphatic conjugated diene monomer unit and a linear alkylene structural unit, adhesive strength of a functional layer that is formed using a produced slurry composition for an electrochemical device can be improved.

Note that "fractional content of an aliphatic conjugated diene monomer unit" and "fractional content of a linear alkylene structural unit" referred to in the present disclosure can be measured by a nuclear magnetic resonance (NMR) method such as $^1$H-NMR.

The present disclosure also aims to advantageously solve the problem set forth above by disclosing a slurry composition for an electrochemical device comprising any one of the binder compositions for an electrochemical device set forth above. A slurry composition for an electrochemical device containing any one of the binder compositions for an electrochemical device set forth above in this manner is capable of forming a functional layer that can cause an electrochemical device to display excellent cycle characteristics.

The presently disclosed slurry composition for an electrochemical device preferably further comprises an electrode active material. When the slurry composition for an electrochemical device further contains an electrode active material, it is possible to form an electrode mixed material layer that can cause a secondary battery (electrochemical device) to display excellent cycle characteristics.

The present disclosure also aims to advantageously solve the problem set forth above by disclosing a functional layer for an electrochemical device formed using any one of the slurry compositions for an electrochemical device set forth above. A functional layer for an electrochemical device that is formed using any one of the slurry compositions for an electrochemical device set forth above in this manner can cause an electrochemical device to display excellent cycle characteristics.

The present disclosure also aims to advantageously solve the problem set forth above by disclosing an electrochemical device comprising a positive electrode, a negative electrode, a separator, and an electrolyte solution, wherein at least one of the positive electrode, the negative electrode, and the separator includes the functional layer for an electrochemical device set forth above. As a result of at least one of the positive electrode, the negative electrode, and the separator including the functional layer for an electrochemical device set forth above in this manner, cycle characteristics of the electrochemical device can be improved.

(Advantageous Effect)

According to the present disclosure, it is possible to provide a slurry composition for an electrochemical device with which it is possible to form a functional layer for an electrochemical device that can cause an electrochemical device to display excellent cycle characteristics, and also to provide a binder composition for an electrochemical device that can be used to produce this slurry composition.

Moreover, according to the present disclosure, it is possible to provide a functional layer for an electrochemical device that can cause an electrochemical device to display excellent cycle characteristics, and also to provide an electrochemical device including this functional layer for an electrochemical device.

DETAILED DESCRIPTION

The following provides a detailed description of embodiments of the present disclosure.

The presently disclosed binder composition for an electrochemical device can be used to form a functional layer (i) on a current collector of an electrode, (ii) on an electrode mixed material layer that is formed on such a current collector (i.e., on an electrode substrate), or (iii) on a separator substrate. The presently disclosed slurry composition for an electrochemical device contains the presently disclosed binder composition for an electrochemical device and can be used as a material in production of the presently disclosed functional layer for an electrochemical device. Moreover, the presently disclosed functional layer for an electrochemical device is produced using the presently disclosed slurry composition for an electrochemical device and constitutes part of a separator or an electrode, for example. Furthermore, the presently disclosed electrochemical device includes the presently disclosed functional layer for an electrochemical device.

(Binder composition for electrochemical device)

Features of the presently disclosed binder composition for an electrochemical device are that the binder composition for an electrochemical device contains a polymer A, a solvent, and an optional polymer B, the polymer A includes a nitrogen-substituted amide group-containing monomer unit and a hydroxyl group-containing monomer unit, the content of the nitrogen-substituted amide group-containing monomer unit in the polymer A is not less than 10 mass% and not more than 80 mass%, and the content of the hydroxyl group-containing monomer unit in the polymer A is not less than 10 mass% and not more than 70 mass%.

By using the presently disclosed binder composition for an electrochemical device, it is possible to improve cycle characteristics of an electrochemical device including a functional layer that is formed using a produced slurry composition for an electrochemical device. Moreover, the presently disclosed binder composition for an electrochemical device can be favorably used as a binder composition for a functional layer as a result of the polymer A in the presently disclosed binder composition for an electrochemical device having excellent binding capacity. The following provides a description of the presently disclosed binder composition for an electrochemical device using a case in which the binder composition for an electrochemical device is used to form a functional layer as an example.

<Polymer A>

The polymer A includes a nitrogen-substituted amide group-containing monomer unit and a hydroxyl group-containing monomer unit, and may optionally include monomer units other than the nitrogen-substituted amide group-containing monomer unit and the hydroxyl group-containing monomer unit. By providing the polymer A with a monomer make-up such as described above, it is possible to improve cycle characteristics of an electrochemical device including a functional layer that is formed using a slurry composition for an electrochemical device containing the polymer A.

The polymer A is preferably a water-soluble polymer. When the polymer A is a water-soluble polymer, slurry dispersibility and functional layer adhesiveness can be improved.

Note that when a polymer is referred to as "water-soluble" in the present disclosure, this means that when 0.5 g of the polymer is dissolved in 100 g of water at 25°C, insoluble content is less than 0.5 mass%.

[Nitrogen-substituted amide group-containing monomer unit]

Examples of nitrogen-substituted amide group-containing monomers include nitrogen-substituted (meth)acrylamide monomers, nitrogen-substituted (meth)acrylamide monomers, and nitrogen-substituted acetamide monomers. One of these nitrogen-substituted amide group-containing monomers may be used individually, or two or more of these nitrogen-substituted amide group-containing monomers may be used in combination in a freely selected ratio. Of these nitrogen-substituted amide group-containing monomers, nitrogen-substituted (meth)acrylamide monomers are preferable from a viewpoint of electrochemical stability.

It should be noted that in the present specification, even nitrogen-substituted amide group-containing monomers that include a hydroxyl group (for example, N-p-hydroxyphenyl(meth)acrylamide and N-p-hydroxycyclohexyl(meth)acrylamide) are considered to be included among "nitrogen-substituted amide group-containing monomers" so long as they include a nitrogen-substituted amide group.

The content of the nitrogen-substituted amide group-containing monomer unit in the polymer A (proportion constituted by the nitrogen-substituted amide group-containing monomer unit among all monomer units included in the polymer A) is required to be 10 mass% or more, and is preferably 30 mass% or more, more preferably 35 mass% or more, and particularly preferably 40 mass% or more. Moreover, the content of the nitrogen-substituted amide group-containing monomer unit in the polymer A is required to be 80 mass% or less, and is preferably 55 mass% or less, and more preferably 50 mass% or less. When the content of the nitrogen-substituted amide group-containing monomer unit in the polymer A is not less than any of the lower limits set forth above, cycle characteristics of an electrochemical device including a functional layer can be improved through (i) improved adsorptivity of the polymer A with respect to an electrode active material in a situation in which the functional layer is an electrode mixed material layer and (ii) improved adsorptivity of the polymer A with respect to a separator substrate in a situation in which the functional layer is a porous membrane formed on the separator substrate. On the other hand, when the content of the nitrogen-substituted amide group-containing monomer unit in the polymer A is not more than any of the upper limits set forth above, the slurry stability of a slurry composition for an electrochemical device containing the polymer A can be improved through improved solubility of the polymer A in a solvent, and thus cycle characteristics of an electrochemical device including a functional layer that is formed using the slurry composition for an electrochemical device containing the polymer A can be improved.

Note that the content of the nitrogen-substituted amide group-containing monomer unit in the polymer A (proportion constituted by the nitrogen-substituted amide group-containing monomer unit among all monomer units included in the polymer A) can be measured by a nuclear magnetic resonance (NMR) method such as $^1$H-NMR.

[[Nitrogen-substituted (meth)acrylamide monomer]]

The aforementioned nitrogen-substituted (meth)acrylamide monomer is a compound resulting from one or two hydrogen atoms of the amide group of (meth)acrylamide being replaced by any of the following (i) to (vi), for example.

(i) A phenyl group including a hydroxyl group and/or a carboxyl group, or a ring-substituted derivative thereof
(ii) A cyclohexyl group including a hydroxyl group and/or a carboxyl group, or a ring-substituted derivative thereof
(iii) A branched alkyl group such as an isopropyl group, an isobutyl group, an isohexyl group, an isoheptyl group, an isooctyl group, or an isononyl group
(iv) A linear alkyl group such as a methyl group, an ethyl group, a propyl group, a butyl group, a hexyl group, a heptyl group, an octyl group, or a nonyl group
(v) A hydroxyalkyl group such as a 2-hydroxyethyl group, a 2-hydroxypropyl group, a 2-hydroxybutyl group, a 2-hydroxyhexyl group, a 2-hydroxyheptyl group, a 2-hydroxyoctyl group, or a 2-hydroxynonyl group
(vi) A dialkylaminoalkyl group such as a dimethylaminomethyl group, a dimethylaminoethyl group, a dimethylaminopropyl group, a dimethylaminobutyl group, a dimethylaminohexyl group, a diethylaminomethyl group, a diethylaminoethyl group, a diethylaminopropyl group, a diethylaminobutyl group, or a diethylaminohexyl group

Specific examples of nitrogen-substituted (meth)acrylamide monomers include N-o-hydroxyphenyl(meth)acrylamide, N-m-hydroxyphenyl(meth)acrylamide, N-p-hydroxyphenyl(meth)acrylamide, N-(2,6-dimethyl-4-hydroxyphenyl)(meth)acrylamide, N-(3,5-dimethyl-4-hydroxyphenyl)(meth)acrylamide, N-(2,4-dihydroxyphenyl)(meth)acrylamide, N-(3,5-dihydroxyphenyl)(meth)acrylamide, N-p-carboxyphenyl(meth)acrylamide, N-(3,5-dicarboxyphenyl)(meth)acrylamide, N-(2-hydroxy-4-carboxyphenyl)(meth)acrylamide, N-o-hydroxycyclohexyl(meth)acrylamide, N-m-hydroxycyclohexyl(meth)acrylamide, N-p-hydroxycyclohexyl(meth)acrylamide, N-(2,6-dimethyl-4-hydroxycyclohexyl)(meth)acrylamide, N-(3,5-dimethyl-4-hydroxycyclohexyl)(meth)acrylamide, N-(2,4-dihydroxycyclohexyl)(meth)acrylamide, N-(3,5-dihydroxycyclohexyl)(meth)acrylamide, N-p-carboxycyclohexyl(meth)acrylamide, N-(3,5-dicarboxycyclohexyl)(meth)acrylamide, N-(2-hydroxy-4-carboxycyclohexyl)(meth)acrylamide, N-isopropyl(meth)acrylamide, N-isobutyl(meth)acrylamide, N-isohexyl(meth)acrylamide, N,N-dimethyl(meth)acrylamide, N,N-diethyl(meth)acrylamide, N,N-dipropyl(meth)acrylamide, N,N-dibutyl(meth)acrylamide, N,N-dihexyl(meth)acrylamide, N-(hydroxymethyl)(meth)acrylamide (N-methylol(meth)acrylamide), N-(2-hydroxyethyl)(meth)acrylamide, N-(2-hydroxypropyl)(meth)acrylamide, N,N-(dimethylaminomethyl)(meth)acrylamide, N,N-(2-dimethylaminoethyl)(meth)acrylamide, N,N-[3-(dimethylamino)propyl](meth)acrylamide, and N,N-[4-(dimethylamino)butyl](meth)acrylamide. One of these nitrogen-substituted (meth)acrylamide monomers may be used individually, or two or more of these nitrogen-substituted (meth)acrylamide monomers may be used in combination in a freely selected ratio. Of these nitrogen-substituted (meth)acrylamide monomers, N-p-hydroxyphenyl(meth)acrylamide, N-p-hydroxycyclohexyl(meth)acrylamide, N-isopropyl(meth)acrylamide, and N-(2-hydroxyethyl)(meth)acrylamide are preferable, and those in which "a substituent includes a cyclic structure", such as N-p-hydroxyphenyl(meth)acrylamide and N-p-hydroxycyclohexyl(meth)acrylamide, are more preferable from a viewpoint of aiming to (i) lower the water content of a functional layer, (ii) improve adsorptivity of the polymer A with respect to an electrode active material in a case in which the functional layer is an electrode mixed material layer, and (iii) improve adsorptivity of the polymer A with respect to a separator substrate in a situation in which the functional layer is a porous membrane layer, and also, through (i) to (iii), improving cycle characteristics of an electrochemical device including the functional layer.

[Hydroxyl group-containing monomer unit]

Examples of hydroxyl group-containing monomers that can form the hydroxyl group-containing monomer unit include hydroxyl group-containing vinyl monomers.

The content of the hydroxyl group-containing monomer unit in the polymer A (proportion constituted by the hydroxyl group-containing monomer unit among all monomer units included in the polymer A) is required to be 10 mass% or more, and is preferably 15 mass% or more, more preferably 20 mass% or more, and particularly preferably 30 mass% or more. Moreover, the content of the hydroxyl group-containing monomer unit in the polymer A is required to be 70 mass% or less, and is preferably 65 mass% or less, more preferably 60 mass% or less, and particularly preferably 40 mass% or less. When the content of the hydroxyl group-containing monomer unit in the polymer A is not less than any of the lower limits set forth above, the viscosity of a produced slurry composition for an electrochemical device can be improved, slurry stability of the produced slurry composition for an electrochemical device can be improved, and thus cycle characteristics of an electrochemical device including a functional layer that is formed using the produced slurry composition for an electrochemical device can be improved. On the other hand, when the content of the hydroxyl group-containing monomer unit in the polymer A is not more than any of the upper limits set forth above, the water content of a functional layer that is formed using a produced slurry composition for an electrochemical device can be lowered, and thus cycle characteristics of an electrochemical device that includes the functional layer formed using the produced slurry composition for an electrochemical device can be further improved.

Note that the content of a hydroxyl group-containing monomer unit in the polymer A (proportion constituted by the hydroxyl group-containing monomer unit among all monomer units included in the polymer A) can be measured by a nuclear magnetic resonance (NMR) method such as $^1$H-NMR.

[[Hydroxyl group-containing vinyl monomer]]

The aforementioned hydroxyl group-containing vinyl monomer may be, without any specific limitations, any monofunctional compound that includes a hydroxyl group (-OH) and a vinyl group ($-CH=CH_2$), and for which one ethylenically unsaturated bond (C=C) of the vinyl group is present in a molecule thereof.

Examples of such hydroxyl group-containing vinyl monomers include 2-hydroxyethyl acrylate, 2-hydroxyethyl methacrylate, 2-hydroxypropyl acrylate, and 2-hydroxypropyl methacrylate. One of these hydroxyl group-containing vinyl monomers may be used individually, or two or more of these hydroxyl group-containing vinyl monomers may be used in combination in a freely selected ratio. Of these hydroxyl group-containing vinyl monomers, 2-hydroxyethyl acrylate, 2-hydroxyethyl methacrylate, 2-hydroxypropyl acrylate, and 2-hydroxypropyl methacrylate are preferable, and 2-hydroxyethyl acrylate and 2-hydroxyethyl methacrylate are more preferable from a viewpoint of improving adhesiveness of a functional layer.

Note that in the present disclosure, compounds given as examples of hydroxyl group-containing vinyl monomers that can form the hydroxyl group-containing vinyl monomer unit are not considered to be included among nitrogen-substituted amide group-containing monomers that can form the previously described nitrogen-substituted amide group-containing monomer unit.

[Other monomer units]

Examples of other monomer units besides the nitrogen-substituted amide group-containing monomer unit and the hydroxyl group-containing monomer unit include, but are not specifically limited to, an acid group-containing monomer unit, a (meth)acrylic acid ester monomer unit, an aromatic vinyl monomer unit, and a conjugated diene monomer unit. One other monomer unit may be used individually, or two or more other monomer units may be used in combination in a freely selected ratio.

The content of other monomer units in the polymer A (proportion constituted by other monomer units among all monomer units included in the polymer A) is preferably 1 mass% or more, more preferably 3 mass% or more, and particularly preferably 10 mass% or more, and is preferably 50 mass% or less, more preferably 40 mass% or less, and particularly preferably 30 mass% or less. When the content of other monomer units in the polymer A is not more than any of the upper limits set forth above, the water content of a functional layer that is formed using a produced slurry composition for an electrochemical device can be lowered, and thus cycle characteristics of an electrochemical device that includes the functional layer formed using the produced slurry composition for an electrochemical device can be further improved.

Note that the content of other monomer units in the polymer A (proportion constituted by other monomer units among all monomer units included in the polymer A) can be measured by a nuclear magnetic resonance (NMR) method such as $^1$H-NMR.

[[Acid group-containing monomer unit]]

Examples of acid group-containing monomers (other monomers) that can form the acid group-containing monomer unit include any monomer that includes an acid group, such as carboxyl group-containing monomers (carboxylic acid group-containing monomers), sulfo group-containing monomers, and phosphate group-containing monomers, without any specific limitations.

Examples of carboxyl group-containing monomers include monocarboxylic acids, dicarboxylic acids, and salts thereof (sodium salts, lithium salts, etc.). Examples of monocarboxylic acids include acrylic acid, methacrylic acid, and crotonic acid. Examples of dicarboxylic acids include maleic acid, fumaric acid, and itaconic acid.

Examples of sulfo group-containing monomers include styrene sulfonic acid, vinyl sulfonic acid, methyl vinyl sulfonic acid, (meth)allyl sulfonic acid, (meth)acrylic acid 2-sulfoethyl, 2-acrylamido-2-methylpropane sulfonic acid, 3-allyloxy-2-hydroxypropane sulfonic acid, and salts thereof (lithium salts, sodium salts, etc.).

Note that in the present disclosure, "(meth)allyl" is used to indicate "allyl" and/or "methallyl", and "(meth)acryl" is used to indicate "acryl" and/or "methacryl".

Examples of phosphate group-containing monomers include 2-(meth)acryloyloxyethyl phosphate, methyl-2-(meth)acryloyloxyethyl phosphate, ethyl-(meth)acryloyloxyethyl phosphate, and salts thereof (sodium salts, lithium salts, etc.). Note that in the present disclosure, "(meth)acryloyl" is used to indicate "acryloyl" and/or "methacryloyl".

Of these acid group-containing monomers, carboxyl group-containing monomers are preferable, methacrylic acid, itaconic acid, acrylic acid, and maleic acid are more preferable, and methacrylic acid is even more preferable from a viewpoint of copolymerizability in the polymer A and slurry stability.

[[(Meth)acrylic acid ester monomer unit]]

Examples of (meth)acrylic acid ester monomers (other monomers) that can form the (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, and 2-ethylhexyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, and 2-ethylhexyl methacrylate. One of these (meth)acrylic acid ester monomers may be used individually, or two or more of these (meth)acrylic acid ester monomers may be used in combination.

[[Aromatic vinyl monomer unit]]

Examples of aromatic vinyl monomers (other monomers) that can form the aromatic vinyl monomer unit include styrene, α-methylstyrene, vinyltoluene, and divinylbenzene. One of these aromatic vinyl monomers may be used individually, or two or more of these aromatic vinyl monomers may be used in combination. Of these aromatic vinyl monomers, styrene is preferable.

[Production method of polymer A]

The polymer A can be produced through polymerization of a monomer composition containing the monomers described above, carried out in an aqueous solvent such as water, for example. The fractional content of each monomer in the monomer composition can be set in accordance with the content (fractional content) of each repeating unit (monomer unit) in the polymer A.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction.

Typically used additives such as emulsifiers, dispersants, polymerization initiators, and polymerization aids may be used in the polymerization. The amounts of these additives may also be the same as typically used. The polymerization conditions can be adjusted as appropriate depending on the polymerization method, the type of polymerization initiator, and so forth.

[Properties of polymer A]

The weight-average molecular weight of the polymer A is preferably 50,000 or more, more preferably 100,000 or more, particularly preferably 200,000 or more, and most preferably 600,000 or more, and is preferably 5,000,000 or less, more preferably 4,000,000 or less, particularly preferably 3,000,000 or less, and most preferably 1,000,000 or less. When the weight-average molecular weight of the polymer A is not less than any of the lower limits set forth above, slurry stability of a produced slurry composition for an electrochemical device can be improved through improvement of solubility of the polymer A in a solvent, and thus cycle characteristics of an electrochemical device including a functional layer that is formed using the produced slurry composition for an electrochemical device can be improved. On the other hand, when the weight-average molecular weight of the polymer A is not more than any of the upper limits set forth above, the water content of a functional layer that is formed using a produced slurry composition for an electrochemical device can be lowered, and thus cycle characteristics of an electrochemical device that includes the functional layer formed using the produced slurry composition for an electrochemical device can be further improved.

Note that the "weight-average molecular weight" of the polymer A is measured by a method described in the EXAMPLES section of the present specification.

<Polymer B>

The polymer B includes either or both of an aliphatic conjugated diene monomer unit and a linear alkylene structural unit, may include both an aliphatic conjugated diene monomer unit and a linear alkylene structural unit, and may optionally include monomer units other than the aliphatic conjugated diene monomer unit and the linear alkylene structural unit. The polymer B can improve adhesive strength of a functional layer formed using a produced slurry composition for an electrochemical device as a result of having a monomer make-up such as described above. Moreover, the polymer B is preferably an insoluble polymer, rather than a soluble polymer.

The term "insoluble" as used herein means that when 0.5 g of the polymer is dissolved in 100 g of water at 25°C, insoluble content is 95 mass% or more.

[Aliphatic conjugated diene monomer unit]

Examples of aliphatic conjugated diene monomers that can form the aliphatic conjugated diene monomer unit include, but are not specifically limited to, 1,3-butadiene, 2-methyl-1,3-butadiene (isoprene), and 2,3-dimethyl-1,3-butadiene. Of these aliphatic conjugated diene monomers, 1,3-butadiene and isoprene are preferable, and 1,3-butadiene is more preferable from a viewpoint of flexibility and adhesive strength of a functional layer. One aliphatic conjugated diene monomer may be used individually, or two or more aliphatic conjugated diene monomers may be used in combination in a freely selected ratio.

The content of the aliphatic conjugated diene monomer unit in the polymer B (proportion constituted by the aliphatic conjugated diene monomer unit among all monomer units included in the polymer B) is preferably 15 mass% or more, more preferably 20 mass% or more, and particularly preferably 30 mass% or more, and is preferably 60 mass% or less, more preferably 50 mass% or less, and particularly preferably 36 mass% or less. When the content of the aliphatic conjugated diene monomer unit in the polymer B is not less than any of the lower limits set forth above, a functional layer can be provided with good flexibility. On the other hand, when the content of the aliphatic conjugated diene monomer unit in the polymer B is not more than any of the upper limits set forth above, a functional layer can be provided with good adhesiveness.

Note that the content of an aliphatic conjugated diene monomer unit in the polymer B (proportion constituted by the aliphatic conjugated diene monomer unit among all monomer units included in the polymer B) can be measured by a nuclear magnetic resonance (NMR) method such as $^1$H-NMR.

[Linear alkylene structural unit]

The linear alkylene structural unit is a repeating unit composed of only an alkylene structure represented by a general formula: $-C_nH_{2n}-$ (n is an integer of 2 or more). The linear alkylene structural unit has a straight chain form.
No specific limitations are placed on the method by which the linear alkylene structural unit is introduced into the polymer B. For example, method (1) or (2), set forth below, may be used.

(1) A method involving producing a polymer including a conjugated diene monomer unit from a monomer composition containing a conjugated diene monomer, and then hydrogenating the polymer so as to convert the conjugated diene monomer unit to an alkylene structural unit
(2) A method involving producing a polymer from a monomer composition containing a 1-olefin monomer

Of these methods, method (1) is preferable in terms of ease of polymer production.
The conjugated diene monomer may, for example, be 1,3-butadiene, 1,3-pentadiene, or the like. Of these conjugated diene monomers, 1,3-butadiene is preferable. In other words, the linear alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene unit (i.e., is more preferably a hydrogenated 1,3-butadiene unit).
The 1-olefin monomer may, for example, be ethylene, propylene, 1-butene, 1-hexene, or the like.
One of these conjugated diene monomers or 1-olefin monomers may be used individually, or two or more of these conjugated diene monomers or 1-olefin monomers may be used in combination.
The content of the linear alkylene structural unit in the polymer B (proportion constituted by the linear alkylene structural unit among all monomer units included in the polymer B) is preferably 25 mass% or more, and more preferably 30 mass% or more, and is preferably 70 mass% or less, more preferably 60 mass% or less, and particularly preferably 40 mass% or less. When the content of the linear alkylene structural unit in the polymer B is not less than any of the lower limits set forth above, a functional layer can be provided with good flexibility. On the other hand, when the content of the linear alkylene structural unit in the polymer B is not more than any of the upper limits set forth above, a functional layer can be provided with good adhesiveness.
Note that the content of a linear alkylene structural unit in the polymer B (proportion constituted by the linear alkylene structural unit among all monomer units included in the polymer B) can be measured by a nuclear magnetic resonance (NMR) method such as $^1$H-NMR.

[Other monomer units]

Examples of monomer units other than the aliphatic conjugated diene monomer unit and the linear alkylene structural unit include, but are not specifically limited to, an aromatic-containing monomer unit, an acid group-containing monomer unit, a hydroxyl group-containing monomer unit such as previously described, and a (meth)acrylic acid ester monomer unit. One of these other monomer units may be used individually, or two or more of these other monomer units may be used in combination in a freely selected ratio.

[[Aromatic-containing monomer unit]]

Examples of aromatic-containing monomers (other monomers) that can form the aromatic-containing monomer unit include, but are not specifically limited to, aromatic vinyl monomers such as styrene, styrene sulfonic acid and salts thereof, α-methylstyrene, butoxystyrene, and vinylnaphthalene. Of these aromatic-containing monomers, styrene is preferable from a viewpoint of adhesiveness and flexibility of a functional layer. One aromatic-containing monomer may be used individually, or two or more aromatic-containing monomers may be used in combination in a freely selected ratio.

[[Acid group-containing monomer unit]]

Examples of acid group-containing monomers (other monomers) that can form the acid group-containing monomer unit include any monomer that includes an acid group, such as carboxyl group-containing monomers, sulfo group-containing monomers, and hydroxyl group-containing monomers, without any specific limitations.
Examples of carboxyl group-containing monomers include monocarboxylic acids, dicarboxylic acids, and salts thereof (sodium salts, lithium salts, etc.). Examples of monocarboxylic acids include acrylic acid, methacrylic acid, and crotonic acid. Examples of dicarboxylic acids include maleic acid, fumaric acid, and itaconic acid. Of these carboxyl group-containing monomers, methacrylic acid, itaconic acid, acrylic acid, and maleic acid are more preferable, and itaconic acid is even more preferable from a viewpoint of polymerization stability and slurry stability.

The content of other monomer units in the polymer B (proportion constituted by other monomer units among all monomer units included in the polymer B) is preferably 25 mass% or more, more preferably 30 mass% or more, and particularly preferably 60 mass% or more, and is preferably 90 mass% or less, more preferably 80 mass% or less, and particularly preferably 70 mass% or less. When the content of other monomer units in the polymer B is not less than any of the lower limits set forth above, polymerization stability and slurry stability can be provided. On the other hand, when the content of other monomer units in the polymer B is not more than any of the upper limits set forth above, close adherence and flexibility of a functional layer can be achieved.

Note that the content of other monomer units in the polymer B (proportion constituted by other monomer units among all monomer units included in the polymer B) can be measured by a nuclear magnetic resonance (NMR) method such as $^1$H-NMR.

<Ratio of mass of polymer A relative to total mass of polymer A and polymer B (mass of polymer A/total mass of polymers A and B)>

The ratio of the mass of the polymer A relative to the total mass of the polymer A and the polymer B (mass of polymer A/total mass of polymers A and B) is preferably 10 mass% or more, more preferably 15 mass% or more, and particularly preferably 40 mass% or more, and is preferably 90 mass% or less, more preferably 85 mass% or less, and particularly preferably 60 mass% or less. When this ratio is not less than any of the lower limits set forth above, slurry stability can be provided. On the other hand, when this ratio is not more than any of the upper limits set forth above, a functional layer can be provided with binding capacity.

<Solvent>

The solvent contained in the presently disclosed binder composition for an electrochemical device is not specifically limited and may be an inorganic solvent such as water, an organic solvent such as N-methylpyrrolidone (NMP), or the like. Also note that the solvent may be an aqueous solution or may be a mixed solution of water and a small amount of an organic solvent.

<Other components>

Besides the components described above, the presently disclosed binder composition for an electrochemical device may contain components such as a reinforcing material, a leveling agent, a viscosity modifier, and an additive for electrolyte solution. These components are not specifically limited so long as they do not affect battery reactions and may be selected from commonly known components such as those described in WO 2012/115096 A1. One of these components may be used individually, or two or more of these components may be used in combination in a freely selected ratio.

<Production method of binder composition for electrochemical device>

No specific limitations are placed on the method by which the presently disclosed binder composition for an electrochemical device is produced. In a case in which production of a polymer A that is a water-soluble polymer is carried out in a solvent-based medium and the polymer A is obtained as a solution, for example, the solution of the polymer A may be used, as obtained, as the binder composition for an electrochemical device, or other optional components may be added to the solution of the polymer A to obtain the binder composition for an electrochemical device. Examples of such other components include the other components described in the subsequent "Slurry composition for electrochemical device" section. Moreover, the binder composition for an electrochemical device may contain a solvent other than water.

(Slurry composition for electrochemical device)

The presently disclosed slurry composition for an electrochemical device is a slurry composition for an electrochemical device that has a solvent as a dispersion medium, that contains at least a binder composition for an electrochemical device containing the above-described polymer A, solvent, and optional polymer B, and that optionally contains functional particles (electrode active material or non-conductive particles) and other components.

In a case in which the presently disclosed slurry composition for an electrochemical device contains an electrode active material, a functional layer formed using the presently disclosed slurry composition for an electrochemical device can function well as an electrode mixed material layer having excellent peel strength.

Moreover, in a case in which the presently disclosed slurry composition for an electrochemical device contains non-conductive particles, a functional layer formed using the presently disclosed slurry composition for an electrochemical device can function well as a porous membrane layer having excellent heat resistance and strength.

<Ratio of mass of polymer A relative to mass of all solid content in slurry composition (mass of polymer A/mass of all solid content in slurry composition)>

The ratio of the mass of the polymer A relative to the mass of all solid content in the slurry composition (mass of polymer A/mass of all solid content in slurry composition) is preferably 0.2 mass% or more, more preferably 0.5 mass% or more, and particularly preferably 1.0 mass% or more, and is preferably 3.0 mass% or less, more preferably 2.5 mass% or less, and particularly preferably 2.0 mass% or less. When this ratio is not less than any of the lower limits set forth above, the slurry can be provided with excellent stability and heat resistance. On the other hand, when this ratio is not more than any of the upper limits set forth above, a functional layer can be provided with flexibility.

<Ratio of mass of polymer B relative to mass of all solid content in slurry composition (mass of polymer B/mass of all solid content in slurry composition)>

The ratio of the mass of the polymer B relative to the mass of all solid content in the slurry composition (mass of polymer B/mass of all solid content in slurry composition) is preferably 0.2 mass% or more, more preferably 0.4 mass% or more, and particularly preferably 1.0 mass% or more, and is preferably 7.0 mass% or less, more preferably 6.0 mass% or less, and particularly preferably 2.0 mass% or less. When this ratio is not less than any of the lower limits set forth above, a functional layer can be provided with excellent adhesiveness. On the other hand, when this ratio is not more than any of the upper limits set forth above, the slurry can be provided with excellent heat resistance, and an increase of battery resistance can be inhibited.

<Functional particles>

Examples of functional particles for causing a functional layer to display an expected function include electrode active material particles formed from an electrode active material in a case in which the functional layer is an electrode mixed material layer and non-conductive particles in a case in which the functional layer is a porous membrane layer, for example.

[Electrode active material]

The electrode active material is a material that gives and receives electrons in an electrode (positive electrode or negative electrode) of a lithium ion secondary battery (electrochemical device). The electrode active material (positive electrode active material or negative electrode active material) of a lithium ion secondary battery (electrochemical device) is normally a material that can occlude and release lithium.

[[Positive electrode active material]]

Specific examples of positive electrode active materials include transition metal-containing compounds such as transition metal oxides, transition metal sulfides, and complex metal oxides of lithium and transition metals. Examples of transition metals include Ti, V, Cr, Mn, Fe, Co, Ni, Cu, and Mo.

Examples of transition metal oxides include $MnO$, $MnO_2$, $V_2O_5$, $V_6O_{13}$, $TiO_2$, $Cu_2V_2O_3$, amorphous $V_2O-P_2O_5$, amorphous $MoO_3$, amorphous $V_2O_5$, and amorphous $V_6O_{13}$.

Examples of transition metal sulfides include $TiS_2$, $TiS_3$, amorphous $MoS_2$, and $FeS$.

Examples of complex metal oxides of lithium and transition metals include lithium-containing complex metal oxides having a layered structure, lithium-containing complex metal oxides having a spinel structure, and lithium-containing complex metal oxides having an olivine structure.

Examples of lithium-containing complex metal oxides having a layered structure include lithium-containing cobalt oxide ($LiCoO_2$), lithium-containing nickel oxide ($LiNiO_2$), a lithium-containing complex oxide of Co-Ni-Mn ($Li(CoMn-Ni)O_2$), a lithium-containing complex oxide of Ni-Mn-Al, a lithium-containing complex oxide of Ni-Co-Al, and a solid solution of $LiMaO_2$ and $Li_2MbO_3$. Note that the lithium-containing complex oxide of Co-Ni-Mn may, for example, be $Li[Ni_{0.5}Co_{0.2}Mn_{0.3}]O_2$ or $Li[Ni_{1/3}Co_{1/3}Mn_{1/3}]O_2$. Moreover, the solid solution of $LiMaO_2$ and $Li_2MbO_3$ may, for example, be $xLiMaO_2 \cdot (1-x)Li_2MbO_3$, where x represents a number satisfying $0 < x < 1$, Ma represents one or more transition metals having an average oxidation state of 3+, and Mb represents one or more transition metals having an average oxidation state of 4+. Examples of solid solutions such as described above include $Li[Ni_{0.17}Li_{0.2}Co_{0.07}Mn_{0.56}]O_2$.

The term "average oxidation state" as used in the present specification refers to an average oxidation state of the "one or more transition metals" and is calculated from the molar quantities and the valences of the transition metals. For example, in a case in which the "one or more transition metals" are made up of 50 mol% of $Ni^{2+}$ and 50 mol% of $Mn^{4+}$, the average oxidation state of the "one or more transition metals" is $(0.5) \times (2+) + (0.5) \times (4+) = 3+$.

Examples of lithium-containing complex metal oxides having a spinel structure include lithium manganate ($LiMn_2O_4$) and compounds in which some of the Mn in lithium manganate ($LiMn_2O_4$) is replaced by another transition metal. A specific example thereof is $Li_s[Mn_{2-t}Mc_t]O_4$ such as $LiNi_{0.5}Mn_{1.5}O_4$, where Mc represents one or more transition metals having an average oxidation state of 4+, specific examples of which include Ni, Co, Fe, Cu, and Cr; t represents a number satisfying $0 < t < 1$; and s represents a number satisfying $0 \leq s \leq 1$. Note that a lithium-rich spinel compound represented by $Li_{1+x}Mn_{2-x}O_4$ ($0 < x < 2$) can also be used as a positive electrode active material.

Examples of lithium-containing complex metal oxides having an olivine structure include olivine-type lithium phosphate compounds represented by $Li_yMdPO_4$ such as olivine-type lithium iron phosphate ($LiFePO_4$) and olivine-type lithium manganese phosphate ($LiMnPO_4$), where Md represents one or more transition metals having an average oxidation state of 3+, examples of which include Mn, Fe, and Co, and y represents a number satisfying $0 \leq y \leq 2$. Md of the olivine-type lithium phosphate compounds represented by $Li_yMdPO_4$ may be partly replaced by another metal. Examples of possible replacing metals include Cu, Mg, Zn, V, Ca, Sr, Ba, Ti, Al, Si, B, and Mo.

[[Negative electrode active material]]

Examples of negative electrode active materials include carbon-based negative electrode active materials, metal-based negative electrode active materials, and negative electrode active materials that are a combination thereof.

A carbon-based negative electrode active material can be defined as an active material that contains carbon as its main framework and into which lithium can be inserted (also referred to as "doping"). Examples of carbon-based negative electrode active materials include carbonaceous materials and graphitic materials.

A carbonaceous material is a material with a low degree of graphitization (i.e., low crystallinity) that can be obtained by carbonizing a carbon precursor by heat treatment at 2000°C or lower. The lower limit of the heat treatment temperature in the carbonization is not specifically limited and may for example be 500°C or higher.

Examples of carbonaceous materials include graphitizing carbon for which the carbon structure can easily be changed according to the heat treatment temperature and non-graphitizing carbon typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

The graphitic material is a material that has high crystallinity of a similar level to graphite and that can be obtained by heat-treating graphitizing carbon at 2000°C or higher. The upper limit of the heat treatment temperature is not specifically limited and may for example be 5000°C or lower.

Examples of the graphitic material include natural graphite and artificial graphite.

Examples of artificial graphite include artificial graphite obtained by heat-treating carbon containing graphitizing carbon mostly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

A metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials include lithium metal; simple substances of metals that can form lithium alloys (for example, Ag, Al, Ba, Bi, Cu, Ga, Ge, In, Ni, P, Pb, Sb, Si, Sn, Sr, Zn, and Ti) and alloys thereof; and oxides, sulfides, nitrides, silicides, carbides, and phosphides of any of the preceding examples. Of these metal-based negative electrode active materials, active materials containing silicon (silicon-based negative electrode active materials) are preferred. One reason for this is that the capacity of a lithium ion secondary battery (electrochemical device) can be increased through use of a silicon-based negative electrode active material.

Examples of the silicon-based negative electrode active material include silicon (Si), a silicon-containing alloy, SiO, $SiO_x$, and a composite of conductive carbon and a Si-containing material obtained by coating or combining a Si-containing material with conductive carbon. One of these silicon-based negative electrode active materials may be used individually, or two or more of these silicon-based negative electrode active materials may be used in combination.

The silicon-containing alloy may be, for example, an alloy composition that contains silicon, aluminum, and transition metals such as iron, and further contains rare-earth elements such as tin and yttrium.

$SiO_x$ is a compound containing Si and at least one of SiO and $SiO_2$, where x is normally not less than 0.01 and less than 2. $SiO_x$ can for example be formed by utilizing a disproportionation reaction of silicon monoxide (SiO). Specifically, $SiO_x$ can be prepared by heat-treating SiO, optionally in the presence of a polymer such as polyvinyl alcohol, to produce silicon and silicon dioxide. After SiO has optionally been pulverized and mixed with the polymer, the heat treatment can be performed at a temperature of 900°C or higher, and preferably 1000°C or higher, in an atmosphere containing organic gas and/or vapor.

The composite of a Si-containing material and conductive carbon may be a compound obtained, for example, by heat-treating a pulverized mixture of SiO, a polymer such as polyvinyl alcohol, and optionally a carbon material in an atmosphere containing organic gas and/or vapor. Furthermore, the composite can also be obtained by commonly known methods such as a method of coating the surfaces of particles of SiO with organic gas or the like by chemical vapor deposition, or a method of forming composite particles (granulation) by a mechanochemical process using SiO particles and graphite or artificial graphite.

[Ratio of mass of electrode active material relative to mass of all solid content in slurry composition (mass of electrode active material/mass of all solid content in slurry composition)]

The ratio of the mass of the electrode active material relative to the mass of all solid content in the slurry composition (mass of electrode active material/mass of all solid content in slurry composition) is preferably 92.0 mass% or more, more preferably 95.0 mass% or more, and particularly preferably 96.0 mass% or more, and is preferably 99.6 mass% or less, more preferably 98.5 mass% or less, and particularly preferably 98.0 mass% or less. When this ratio is not less than any of the lower limits set forth above, higher capacity can be achieved.

[Non-conductive particles]

The non-conductive particles are particles that maintain their shape without dissolving in water or a non-aqueous electrolyte solution of a secondary battery (electrochemical device). The non-conductive particles are electrochemically stable and are, therefore, present stably in a functional layer in the environment of use of a secondary battery (electrochemical device).

Various types of inorganic fine particles and organic fine particles can be used as the non-conductive particles.

Specifically, although both inorganic fine particles and organic fine particles can be used as the non-conductive particles, inorganic fine particles are normally used. The material of the non-conductive particles is preferably an electrochemically stable material that is present stably in the environment of use of a secondary battery (electrochemical device). Examples of materials of the non-conductive particles that are preferable from a viewpoint such as set forth above include particles of oxides such as aluminum oxide (alumina), hydrous aluminum oxide (boehmite), silicon oxide, magnesium oxide (magnesia), calcium oxide, titanium oxide (titania), $BaTiO_3$, ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clays such as talc and montmorillonite. These particles may be subjected to element substitution, surface treatment, solid solution treatment, and/or the like as necessary.

One of these types of non-conductive particles may be used individually, or two or more of these types of non-conductive particles may be used in combination. The non-conductive particles are preferably aluminum oxide (alumina). The particle diameter of the non-conductive particles is not specifically limited and can be the same as that of conventionally used non-conductive particles.

[Ratio of mass of non-conductive particles relative to mass of all solid content in slurry composition (mass of non-conductive particles/mass of all solid content in slurry composition)]

The ratio of the mass of the non-conductive particles relative to the mass of all solid content in the slurry composition (mass of non-conductive particles/mass of all solid content in slurry composition) is preferably 80 mass% or more, more preferably 85 mass% or more, and particularly preferably 90 mass% or more, and is preferably 99 mass% or less, more preferably 98 mass% or less, and particularly preferably 97.5 mass% or less. When this ratio is not less than any of the lower limits set forth above, the slurry can be provided with excellent heat resistance. On the other hand, when this ratio is not more than any of the upper limits set forth above, a functional layer can be provided with good adhesiveness.

<Other components>

The slurry composition for an electrochemical device may contain other optional components besides the components described above. No specific limitations are placed on these optional components so long as they do not have an excessively negative influence on battery reactions in a secondary battery (electrochemical device) in which a functional layer is used. Furthermore, one of such optional components may be used, or two or more of such optional components may be used.

Examples of optional components that can be used include wetting agents, particulate binders, leveling agents, and electrolyte solution decomposition inhibitors.

[Wetting agent]

Examples of wetting agents that can be used include, but are not specifically limited to, nonionic surfactants and anionic surfactants. Of these wetting agents, aliphatic polyether nonionic surfactants are preferable.
The amount of the wetting agent that is used per 100 parts by mass of the functional particles is preferably 0.05 parts by mass or more, more preferably 0.1 parts by mass or more, and particularly preferably 0.15 parts by mass or more, and is preferably 2 parts by mass or less, more preferably 1.5 parts by mass or less, particularly preferably 1 part by mass or less, and most preferably 0.25 parts by mass or less. When the amount of the wetting agent that is used is within any of the ranges set forth above, coatability of a composition for a functional layer can be sufficiently improved, and low-temperature output characteristics of a secondary battery including a functional layer that is formed using the composition for a functional layer can be sufficiently improved.

<Production of slurry composition for electrochemical device>

The slurry composition for an electrochemical device set forth above can be produced by dispersing the above-described components in an aqueous medium serving as a dispersion medium. Specifically, the slurry composition for an electrochemical device can be produced by mixing the above-described components and the aqueous medium using a mixer such as a ball mill, a sand mill, a bead mill, a pigment disperser, a grinding machine, an ultrasonic disperser, a homogenizer, a planetary mixer, or a FILMIX. A high-level disperser such as a bead mill, a roll mill, or a FILMIX may also be used from a viewpoint of applying a high level of dispersing shear. Mixing of the above-described components and the aqueous medium may normally be performed within a range of room temperature to 80°C for a period of 10 minutes to several hours.
Although water is normally used as the aqueous medium, alternatively, an aqueous solution of a freely selected compound or a mixed solution of a small amount of an organic medium and water may be used. Note that water used as the aqueous medium may include water that was contained in the binder composition.

(Functional layer for electrochemical device)

The functional layer for an electrochemical device is a layer having a function such as reinforcement or giving and receiving electrons in an electrochemical device. For example, the functional layer may be an electrode mixed material layer that gives and receives electrons through electrochemical reactions or a porous membrane layer that improves heat resistance and strength.
The presently disclosed functional layer for an electrochemical device is formed from the slurry composition for an electrochemical device set forth above. For example, the presently disclosed functional layer for an electrochemical device can be formed by applying the slurry composition for an electrochemical device set forth above onto the surface of a suitable substrate to form a coating film, and then drying the coating film that is formed. In other words, the presently disclosed functional layer for an electrochemical device is formed by a dried product of the slurry composition for an electrochemical device set forth above and normally contains the polymer A, the polymer B, the functional particles, and the other optional components.
Note that the ratio of components (excluding a dispersion medium such as water) contained in the presently disclosed functional layer for an electrochemical device is normally the same as the ratio in which these components are contained in the slurry composition for an electrochemical device set forth above. Moreover, the preferred ratio of these components in the functional layer for an electrochemical device is the same as the preferred ratio of the components in the slurry composition for an electrochemical device set forth above.
The presently disclosed functional layer for an electrochemical device can function well as an electrode mixed material layer or a porous membrane layer as a result of being formed from the presently disclosed slurry composition for an electrochemical device. Moreover, the presently disclosed functional layer for an electrochemical device can enhance cycle characteristics and the like of an electrochemical device.

<Substrate>

No specific limitations are placed on the substrate on which the functional layer for an electrochemical device is formed. For example, the substrate may be a separator substrate in a case in which the functional layer is used as a member that constitutes part of a separator and may be a current collector substrate formed by a current collector or an electrode substrate obtained by forming an electrode mixed material layer on a current collector in a case in which the functional layer is used as a member that constitutes part of an electrode. No specific limitations are placed on the method of use of the functional layer formed on the substrate. For example, the functional layer may be formed on a separator substrate or the like and then used in this form as a battery component such as a separator. Alternatively, an electrode mixed material layer may be formed as the functional layer on a current collector substrate and then be used as an electrode. Alternatively, the functional layer may be formed on an electrode substrate and then used as an electrode. Alternatively, the functional layer may be formed on a releasable substrate, peeled from the substrate, and then pasted onto another substrate to be used as a battery component.

However, it is preferable that a separator substrate, a current collector substrate, or an electrode substrate is used as the substrate from a viewpoint of raising battery component production efficiency since a step of peeling a releasable substrate from the functional layer can be omitted.

[Separator substrate]

The separator substrate is not specifically limited and may be a known separator substrate such as an organic separator substrate. The organic separator substrate is a porous member that is made from an organic material. The organic separator substrate may, for example, be a microporous membrane containing a polyolefin resin such as polyethylene or polypropylene, or an aromatic polyamide resin, and is preferably a microporous membrane made from polyethylene due to the excellent strength thereof. Note that although the organic separator substrate may be of any thickness, the thickness thereof is normally 0.5 $\mu$m or more, and preferably 5 $\mu$m or more, and is normally 40 $\mu$m or less, preferably 30 $\mu$m or less, and more preferably 20 $\mu$m or less.

[Current collector substrate]

The current collector substrate is not specifically limited and may be a known current collector.
The current collector is a material having electrical conductivity and electrochemical durability. Specifically, the current collector may, for example, be made of a metal material such as iron, copper, aluminum, nickel, stainless steel, titanium, tantalum, gold, or platinum. One of these materials may be used individually, or two or more of these materials may be used in combination in a freely selected ratio.

[Electrode substrate]

The electrode substrate (positive electrode substrate or negative electrode substrate) is not specifically limited and may, for example, be an electrode substrate obtained by forming an electrode mixed material layer on a current collector.
Note that the current collector, the electrode active material (positive electrode active material or negative electrode active material) and binder for an electrode mixed material layer (binder for positive electrode mixed material layer or binder for negative electrode mixed material layer) in the electrode mixed material layer, and the method by which the electrode mixed material layer is formed on the current collector may be known examples thereof such as any of those described in JP 2013-145763 A, for example. Moreover, the polymer A contained in the presently disclosed binder composition for an electrochemical device may be used as the binder for an electrode mixed material layer.

[Releasable substrate]

Any known releasable substrate may be used without any specific limitations as a releasable substrate on which the functional layer is formed.

<Formation method of functional layer for electrochemical device>

Examples of methods by which the functional layer may be formed on a substrate such as the separator substrate, current collector substrate, or electrode substrate set forth above include:

    (1) a method in which the slurry composition for an electrochemical device is applied onto the surface of a separator substrate, current collector substrate, or electrode substrate and is then dried;
(2) a method in which a separator substrate, current collector substrate, or electrode substrate is immersed in the slurry composition for an electrochemical device and is then dried; and
(3) a method in which the slurry composition for an electrochemical device is applied onto a releasable substrate, is dried to produce a functional layer, and then the obtained functional layer for an electrochemical device is transferred onto the surface of a separator substrate, current collector substrate, or electrode substrate.

Of these methods, method (1) is particularly preferable since it allows simple control of the thickness of the functional layer for an electrochemical device. In more detail, method (1) includes a step of applying the slurry composition for an electrochemical device onto a separator substrate, current collector substrate, or electrode substrate (application step) and a step of drying the slurry composition for an electrochemical device that has been applied onto the separator substrate, current collector substrate, or electrode substrate to form a functional layer (functional layer formation step).

[Application step]

No specific limitations are placed on the method by which the slurry composition for an electrochemical device is applied onto the substrate in the application step. For example, a method such as doctor blading, reverse roll coating, direct roll coating, gravure coating, extrusion coating, or brush coating may be used.

[Functional layer formation step]

The slurry composition for an electrochemical device on the substrate may be dried by any commonly known method without any specific limitations in the functional layer formation step. For example, the drying method may be drying by warm, hot, or low-humidity air; drying in a vacuum; or drying by irradiation with infrared light, electron beams, or the like. Although no specific limitations are placed on the drying conditions, the drying temperature is preferably 50°C to 100°C, and the drying time is preferably 5 minutes to 30 minutes. The thickness of the functional layer for an electrochemical device formed on the substrate can be adjusted as appropriate.

Note that in a case in which the functional layer is an electrode mixed material layer, the electrode mixed material layer may be subjected to pressure application treatment (pressing process) by mold pressing, roll pressing, or the like after the drying step. The pressing process can improve close adherence between the electrode mixed material layer and the current collector. Moreover, the electrode mixed material layer can be densified and a more compact secondary battery size can be achieved.

(Electrochemical device)

The presently disclosed electrochemical device may be a lithium ion secondary battery or an electric double-layer capacitor, but is not specifically limited thereto, and is preferably a lithium ion secondary battery. A feature of the presently disclosed electrochemical device is that it includes the presently disclosed functional layer for an electrochemical device. This electrochemical device has excellent characteristics such as cycle characteristics.

Although the following describes, as one example, a case in which the electrochemical device is a lithium ion secondary battery, the presently disclosed electrochemical device is not limited to the following example. A lithium ion secondary battery corresponding to the presently disclosed electrochemical device normally includes electrodes (positive electrode and negative electrode), an electrolyte solution, and a separator, wherein the presently disclosed functional layer for an electrochemical device is used in at least one of the positive electrode, the negative electrode, and the separator.

<Positive electrode, negative electrode, and separator>

At least one of the positive electrode, the negative electrode, and the separator used in the lithium ion secondary battery corresponding to the presently disclosed electrochemical device includes the presently disclosed functional layer for an electrochemical device. Specifically, in the case of a positive electrode or negative electrode that includes the functional layer for an electrochemical device, an electrode obtained by forming an electrode mixed material layer as the functional layer on a current collector (substrate) or an electrode obtained by providing the functional layer on an electrode substrate including an electrode mixed material layer formed on a current collector can be used. Moreover, in the case of a separator that includes the functional layer for an electrochemical device, a separator obtained by providing the functional layer for an electrochemical device on a separator substrate can be used. Note that the current collector substrate, electrode substrate, and separator substrate may be the same as any of those described in the "Substrate" section.

<Positive electrode and negative electrode>

So long as at least one of the positive electrode, the negative electrode, and the separator used in the lithium ion secondary battery corresponding to the presently disclosed electrochemical device includes the presently disclosed functional layer for an electrochemical device as described above, the negative electrode may be a known negative electrode, the positive electrode may be a known positive electrode, or the positive electrode and the negative electrode of the secondary battery may each be a known electrode.

[Separator]

In a case in which at least one of the positive electrode and the negative electrode used in the lithium ion secondary battery corresponding to the presently disclosed electrochemical device includes the presently disclosed functional layer for an electrochemical device, the separator may be a separator such as described in JP 2012-204303 A, for example. Of these separators, a microporous membrane made of polyolefinic resin (polyethylene, polypropylene, polybutene, or polyvinyl chloride) is preferred since such a membrane can reduce the total thickness of the separator, which increases the ratio of electrode active material in the lithium ion secondary battery corresponding to the presently disclosed electrochemical device, and consequently increases the capacity per volume.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of suitable organic solvents in the case of a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as $\gamma$-butyrolactone and methyl formate; ethers such as 1,2-dimethoxyethane and tetrahydrofuran; and sulfur-containing compounds such as sulfolane and dimethyl sulfoxide.

Furthermore, a mixture of such solvents may be used. Of these solvents, carbonates are preferable due to having a high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Production method of electrochemical device>

The lithium ion secondary battery corresponding to the presently disclosed electrochemical device can be produced by, for example, stacking the positive electrode and the negative electrode with the separator in-between, performing rolling, folding, or the like of the resultant stack as necessary to place the stack in a battery container, injecting the electrolyte solution into the battery container, and sealing the battery container. Note that at least one component among the positive electrode, the negative electrode, and the separator is a component that includes the presently disclosed functional layer for an electrochemical device. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a repeating unit (monomer unit) that is formed through polymerization of a given monomer is normally, unless otherwise specified, the same as the ratio (charging ratio) of the given monomer among all monomers used in polymerization of the polymer.

In the examples and comparative examples, the following methods were used to measure and evaluate (i) the weight-average molecular weight of a polymer A, (ii) stability of a slurry composition, (iii) adhesive strength, (iv) water content of a functional layer, and (v) cycle characteristics of a secondary battery.

<(i) Weight-average molecular weight of polymer A>

The weight-average molecular weight of a polymer A was measured by gel permeation chromatography (GPC). First, the polymer A was added to approximately 5 mL of eluent such that the solid content concentration thereof was approximately 0.5 g/L and was slowly dissolved at room temperature. After dissolution of the polymer A had been confirmed by eye, filtration was performed gently using a 0.45 $\mu$m filter to prepare a measurement sample. The weight-average molecular weight was calculated as a standard substance-equivalent value by preparing a calibration curve using a standard substance.

The measurement conditions were as follows.

«Measurement conditions»

Column: Produced by Showa Denko K.K.; Product name: Shodex OHpak (SB-G, SB-807HQ, SB-806MHQ)
Eluent: 0.1 M Tris buffer solution (0.1 M of potassium chloride added)
Flow rate: 0.5 mL/min
Sample concentration: 0.05 g/L (solid content concentration)
Injection volume: 200 $\mu$L
Column temperature: 40°C
Detector: Differential refractive index detector RI (produced by Tosoh Corporation; product name: RI-8020)
Standard substance: Monodisperse pullulan (produced by Showa Denko K.K.)

<(ii) Stability of slurry composition>

The viscosity $\eta$ of a produced slurry composition was measured using a B-type viscometer under conditions of a temperature of 25°C, a rotation speed of 60 rpm, and a rotation time of 60 seconds, and was evaluated as follows.

The viscosity after the slurry composition had been left at rest at 25°C for 1 hour after production thereof was taken to be $\eta$0. Moreover, the viscosity after the slurry composition had been further left at rest at 25°C for 24 hours was taken to be $\eta$1. The ratio of these viscosities was taken to be a slurry viscosity change ratio $\eta$2.

$$\eta2 = \eta1/\eta0$$

A slurry viscosity ratio $\eta$2 closer to 1.0 indicates greater inhibition of slurry thinning and stability of slurry composition production and handling.

A: Slurry viscosity change ratio $\eta$2 of not less than 0.9 and less than 1.1

B: Slurry viscosity change ratio $\eta$2 of not less than 0.8 and less than 0.9

C: Slurry viscosity change ratio $\eta$2 of not less than 0.7 and less than 0.8

D: Slurry viscosity change ratio $\eta$2 of less than 0.7

<(iii) Adhesive strength>

Adhesive strength was measured as peel strength. A rectangle of 1 cm (width) $\times$ 10 cm (length) was cut from a negative electrode, positive electrode, or separator to obtain a test specimen. The test specimen was then secured in place with the functional layer surface facing upward. Cellophane tape was affixed to the surface of the functional layer of the test specimen that had been secured in place. Thereafter, the cellophane tape was pulled in a direction at 180° from one end of the test specimen at a speed of 50 mm/min so as to peel off the cellophane tape, and the stress during peeling was measured. This measurement was performed in the same manner five times and an average value of the measurements was taken to be the peel strength. Adhesive strength was then judged by the following standard. A larger peel strength indicates higher adhesive strength.

    A: Peel strength of 5 N/m or more
    B: Peel strength of not less than 4 N/m and less than 5 N/m
    C: Peel strength of not less than 3 N/m and less than 4 N/m
    D: Peel strength of less than 3 N/m

<(iv) Water content of functional layer>

A substrate (current collector substrate or separator substrate) that had been coated with an obtained slurry composition for an electrochemical device was cut out to a size of 10 cm (width) $\times$ 10 cm (length) to obtain a test specimen. The test specimen was left at a temperature of 25°C and a dew point temperature of -60°C for 24 hours. The water content of the test specimen was subsequently measured by the Karl Fischer method (JIS K0068(2001); water vaporization method; vaporization temperature: 150°C) using a coulometric titration water meter. The water content was evaluated by the following standard.

    A: Water content of less than 200 ppm
    B: Water content of not less than 200 ppm and less than 300 ppm
    C: Water content of 300 ppm or more

<(v) Cycle characteristics of secondary battery>

A laminate cell-type lithium ion secondary battery was left at rest in a 25°C environment for 24 hours after injection of electrolyte solution. The lithium ion secondary battery was subsequently subjected to a charge/discharge operation of charging to a cell voltage of 4.25 V and discharging to a cell voltage of 3.0 V by a 0.1 C constant-current method. The initial capacity C0 was measured. In addition, the lithium ion secondary battery was subjected to 100 charge/discharge cycles of charging to a cell voltage of 4.25 V and discharging to a cell voltage of 3.0 V by a 0.1 C constant-current method in a 60°C environment. The capacity C2 after 100 cycles was measured. A capacity maintenance rate C3 was calculated by the following formula.

$$C3\ (\%) = (C2/C0) \times 100$$

A larger value indicates better cycle characteristics.

    A: Capacity maintenance rate C3 of 95% or more
    B: Capacity maintenance rate C3 of not less than 90% and less than 95%
    C: Capacity maintenance rate C3 of not less than 80% and less than 90%

D: Capacity maintenance rate C3 of less than 80%

(Example 1)

<Production of polymer A>

A flask equipped with a condenser and a stirrer was charged with 5 parts by mass of 2,2'-azobis(2-(2-imidazolin-2-yl)propane) disulfate dihydrate and 789 parts by mass of deionized water. Next, 45 parts of N-p-hydroxyphenylacrylamide as a nitrogen-substituted amide group-containing monomer, 35 parts of 2-hydroxyethyl acrylate (2-HEA) as a hydroxyl group-containing monomer, and 20 parts of methacrylic acid (MAA) as another monomer were mixed and added into the flask. Nitrogen purging of the flask was performed, the solution was heated to a temperature of 70°C under gentle stirring, and then this temperature was maintained for 5 hours to carry out polymerization and thereby obtain a solution containing a polymer A. The weight-average molecular weight of the obtained polymer A was measured by the previously described method. The result is shown in Table 1-1.

<Production of polymer B>

A 5 MPa pressure vessel A equipped with a stirrer was charged with 3.15 parts of styrene as another monomer, 1.66 parts of 1,3-butadiene as an aliphatic conjugated diene monomer, 0.19 parts of itaconic acid as another monomer, 0.2 parts of sodium lauryl sulfate as an emulsifier, 20 parts of deionized water, and 0.03 parts of potassium persulfate as a polymerization initiator. These materials were sufficiently stirred, were subsequently heated to 60°C to initiate polymerization, and were reacted for 6 hours to obtain seed particles.

After this reaction, heating was performed to 75°C, addition of a mixture of 59.35 parts of styrene as another monomer, 31.34 parts of 1,3-butadiene as an aliphatic conjugated diene monomer, 3.81 parts of itaconic acid as another monomer, 0.25 parts of tert-dodecyl mercaptan as a chain transfer agent, and 0.35 parts of sodium lauryl sulfate as an emulsifier to the pressure vessel A from a separate vessel B was initiated, and, simultaneously thereto, addition of 1 part of potassium persulfate to the pressure vessel A as a polymerization initiator was initiated so as to initiate a second stage of polymerization.

Once 4 hours had passed from the start of the second stage of polymerization (once 70% of the entire monomer composition had been added), 1 part of 2-hydroxyethyl acrylate was added into the pressure vessel A as another monomer over 1.5 hours.

In other words, 62.5 parts of styrene as another monomer, 33.0 parts of 1,3-butadiene as an aliphatic conjugated diene monomer, 4.0 parts of itaconic acid as another monomer, and 1.0 parts of 2-hydroxyethyl acrylate as another monomer were used as the overall monomer composition.

Addition of the mixture containing this monomer composition was completed once 5.5 hours had passed from the start of the second stage of polymerization. Heating was subsequently performed to 85°C and the reaction was continued for 6 hours.

Cooling was performed to terminate the reaction once the polymerization conversion rate reached 97%. The mixture containing the polymerized product was adjusted to pH 8 through addition of 5% sodium hydroxide aqueous solution. Thereafter, unreacted monomer was removed by thermal-vacuum distillation. Cooling was then performed to yield an insoluble polymer B containing the target polymerized product.

<Production of slurry composition for electrochemical device (slurry composition for negative electrode coating)>

A planetary mixer equipped with a disper was charged with 97.0 parts of artificial graphite (volume-average particle diameter: 24.5 $\mu$m) having a specific surface area of 4 m$^2$/g as an electrode active material and 1.5 parts in terms of solid content of the polymer A. These materials were adjusted to a solid content concentration of 55% with deionized water and were mixed at room temperature for 60 minutes. Next, the solid content concentration was adjusted to 50% with deionized water and a further 15 minutes of mixing was performed to obtain a mixture.

The mixture was then mixed with 1.5 parts (in terms of solid content) of the polymer B for 10 minutes. The resultant mixture was subjected to a defoaming process under reduced pressure to yield a slurry composition for an electrochemical device having good fluidity. Stability of the obtained slurry composition for an electrochemical device was evaluated by the previously described method. The obtained slurry composition for an electrochemical device was also used to evaluate the water content of a functional layer. The results are shown in Table 1-1.

<Production of negative electrode>

The slurry composition for an electrochemical device (slurry composition for negative electrode coating) described above was applied onto copper foil (current collector) of 18 $\mu$m in thickness by a comma coater such as to have a thickness after drying of approximately 150 $\mu$m. The copper foil with the slurry composition for an electrochemical device applied thereon was conveyed inside a 75°C oven for 2 minutes and a 120°C oven for 2 minutes at a speed of 0.5 m/min so as to dry the slurry composition on the copper foil and obtain a negative electrode web. The negative electrode web was rolled by roll pressing to obtain a negative electrode having a negative electrode mixed material layer thickness of 80 $\mu$m.

Adhesive strength (close adherence strength of functional layer (negative electrode mixed material layer) and current collector (copper foil)) was measured with respect to the obtained negative electrode by the previously described method.

<Production of positive electrode>

A slurry composition for lithium ion secondary battery positive electrode coating (not corresponding to the presently disclosed slurry composition for an electrochemical device) was obtained by mixing 95 parts of LiCoO$_2$ (average particle diameter: 14.8 $\mu$m) having a spinel structure as a positive electrode active material, 3 parts in terms of solid content of PVDF (polyvinylidene fluoride) as a binder for a positive electrode mixed material layer, 2 parts of acetylene black (average particle diameter: 50 nm) as a conductive material, and 20 parts of N-methylpyrrolidone as a solvent in a planetary mixer.

The obtained slurry composition for lithium ion secondary battery positive electrode coating was applied onto aluminum foil (current collector) of 20 μm in thickness by a comma coater such as to have a thickness after drying of approximately 100 μm. The aluminum foil with the slurry composition for lithium ion secondary battery positive electrode coating applied thereon was conveyed inside a 60°C oven for 2 minutes and a 120°C oven for 2 minutes at a speed of 0.5 m/min so as to dry the slurry composition for lithium ion secondary battery positive electrode coating on the aluminum foil and obtain a positive electrode web. The positive electrode web was rolled by roll pressing to obtain a positive electrode having a positive electrode mixed material layer thickness of 70 μm.

<Preparation of separator>

A separator made from a single layer of polypropylene (width: 65 mm; length: 500 mm; thickness: 25 μm; produced by a dry method; porosity: 55%) was prepared. A square of 5.2 cm × 5.2 cm was cut out from the separator to obtain a square separator, and this square separator was used in the lithium ion secondary battery described below.

<Production of secondary battery>

An aluminum packing case was prepared as a battery case. A square of 4.6 cm × 4.6 cm was cut out from the positive electrode produced as described above to obtain a square positive electrode. The square positive electrode was positioned inside the aluminum packing case such that the surface at the current collector side thereof was in contact with the aluminum packing case. The separator prepared as described above was positioned on the surface at the positive electrode mixed material layer side of the square positive electrode. In addition, a square of 5 cm × 5 cm was cut out from the negative electrode produced as described above to obtain a square negative electrode. The square negative electrode was positioned on the separator such that the surface at the negative electrode mixed material layer side thereof faced toward the separator. Next, electrolyte solution (solvent: ethylene carbonate (EC)/methyl ethyl carbonate/vinylene carbonate = 68.5/30/1.5 (volume ratio); electrolyte: $LiPF_6$ of 1 M in concentration) was injected such that no air remained. The aluminum packing case was then closed by heat sealing at 150°C to tightly seal an opening of the aluminum packing case, and thereby produce a lithium ion secondary battery. Cycle characteristics were evaluated with respect to the obtained lithium ion secondary battery.

(Examples 2 to 6 and 9, and Comparative Examples 1 to 3)

A polymer A, a polymer B, and a slurry composition for an electrochemical device (slurry composition for negative electrode coating) were produced, a separator was prepared, and a negative electrode, a positive electrode, and a secondary battery were produced in the same way as in Example 1 with the exception that the types and proportions of monomers used in production of the polymer A were changed as shown in Table 1-1 or Table 1-2. Each evaluation was also performed in the same way as in Example 1. The results are shown in Table 1-1 or Table 1-2.

(Example 7)

A polymer A, a polymer B, and a slurry composition for an electrochemical device (slurry composition for negative electrode coating) were produced, a separator was prepared, and a negative electrode, a positive electrode, and a secondary battery were produced in the same way as in Example 1 with the exception that 2.5 parts of isopropyl alcohol was added in the same way as each monomer in production of the polymer A in Example 1 so as to adjust a molecular chain growth reaction and thereby obtain a polymer A having a weight-average molecular weight of 80,000. Each evaluation was also performed in the same way as in Example 1. The results are shown in Table 1-1.

(Example 8)

A polymer A, a polymer B, and a slurry composition for an electrochemical device (slurry composition for negative electrode coating) were produced, a separator was prepared, and a negative electrode, a positive electrode, and a secondary battery were produced in the same way as in Example 1 with the exception that 589 parts of deionized water was added instead of 789 parts of deionized water in production of the polymer A in Example 1 such that a molecular chain growth reaction was adjusted and a polymer A having a weight-average molecular weight of 8,500,000 was obtained. Each evaluation was also performed in the same way as in Example 1. The results are shown in Table 1-2.

(Example 10)

A separator was prepared, and a polymer A and a secondary battery were produced in the same way as in Example 1 with the exception that production of a polymer B, a slurry composition for an electrochemical device (slurry composition for positive electrode coating), a negative electrode, and a positive electrode were carried out as described below. Each evaluation was also performed in the same way as in Example 1. The results are shown in Table 1-2.

<Production of polymer B>

An autoclave equipped with a stirrer was charged with 240 parts of deionized water, 2.5 parts of sodium alkylbenzene sulfonate, and 35 parts of acrylonitrile in this order. After purging the inside of a bottle with nitrogen, 65 parts of 1,3-butadiene was added under pressure, 0.25 parts of ammonium persulfate was added, and a polymerization reaction was carried out at a reaction temperature of 40°C to obtain a polymer including nitrile group-containing polymerization units and polymerization units formable by a conjugated diene monomer. The polymerization conversion rate was 85%.

Water was used to adjust the polymer to a total solid content concentration of 12 mass% and then 400 mL (total solid content: 48 g) of the resultant solution was loaded into a 1 L autoclave that was equipped with a stirrer. Nitrogen gas was passed for 10 minutes in order to remove dissolved oxygen in the polymer, 75 mg of palladium acetate, as a hydrogenation reaction catalyst, was dissolved in 180 mL of water to which nitric acid had been added in an amount of 4 molar equivalents relative to the palladium (Pd), and then this solution was added into the autoclave. After purging the system twice with hydrogen gas, the contents of the autoclave were heated to 50°C in a state of pressurization to 3 MPa with hydrogen gas, and a hydrogenation reaction (referred to as a "first stage hydrogenation reaction") was carried out for 6 hours. The iodine value of the polymer at this point was 45 mg/100 mg.

Next, the autoclave was restored to atmospheric pressure, a further 25 mg of palladium acetate, as a hydrogenation reaction catalyst, was dissolved in 60 mL of deionized water to which nitric acid had been added in an amount of 4 molar equivalents relative to the Pd, and this solution was added into the autoclave. After purging the system twice with hydrogen gas, the contents of the autoclave were heated to 50°C in a state of pressurization to 3 MPa with hydrogen gas, and a hydrogenation reaction (second stage hydrogenation reaction) was carried out for 6 hours. Next, the autoclave was restored to atmospheric pressure, a further 25 mg of palladium acetate, as a hydrogenation reaction catalyst, was dissolved in 60 mL of water to which nitric acid had been added in an amount of 4 molar equivalents relative to the Pd, and this solution was added into the autoclave. After purging the system twice with hydrogen gas, the contents of the autoclave were heated to 50°C in a state of pressurization to 3 MPa with hydrogen gas, and a hydrogenation reaction (referred to as a "second stage hydrogenation reaction") was carried out for 6 hours.

Thereafter, the contents of the autoclave were restored to normal temperature, the system was converted to a nitrogen atmosphere, and an evaporator was used to perform concentrating until a solid content concentration of 40% was reached to thereby obtain a binder water dispersion. Next, 320 parts of N-methylpyrrolidone (hereinafter, referred to as "NMP") was added to 100 parts of the binder water dispersion, and water was evaporated under reduced pressure to obtain an NMP solution of the binder as a binder composition for a positive electrode. Note that when 100 g of the NMP solution was coagulated in 1 L of methanol, was subsequently vacuum dried overnight at 60°C to obtain a dried product, and was analyzed by NMR, the binder was found to comprise 35 mass% of nitrile group-containing polymerization units (acrylonitrile-derived polymerization units) and 65 mass% of 1,3-butadiene-derived polymerization units relative to the total amount of polymer. Moreover, the 1,3-butadiene-derived polymerization units were made up of 56.4 mass% of linear alkylene polymerization units having a carbon number of 4 or more, 2.7 mass% of non-hydrogenated butadiene polymerization units, and 5.9 mass% of 1,2-addition polymerization units. The iodine value of the binder was 13 mg/100 mg.

<Production of slurry composition for electrochemical device (slurry composition for positive electrode coating)>

A slurry composition for an electrochemical device (slurry composition for positive electrode coating) was produced by loading 95.5 parts of lithium nickel cobalt manganese oxide ($LiNi_{0.5}Co_{0.2}Mn_{0.3}O_2$) as a positive electrode active material, 2.0 parts of acetylene black (DENKA BLACK powdered product produced by Denka Company Limited) and 0.5 parts of carbon nanotubes (multi-walled carbon nanotubes; produced by Hodogaya Chemical Co., Ltd.; product name: CT-12; average fiber diameter: 105 nm) as conductive materials, 1.5 parts (in terms of solid content of polymer A) of the NMP solution of the polymer A, 0.5 parts (in terms of solid content of polymer B) of the NMP solution of the polymer B, and an appropriate amount of NMP as supplementary solvent into a planetary mixer and mixing these materials in the mixer. Note that the amount of supplementary NMP was adjusted such that the viscosity of the obtained slurry composition for positive electrode coating at a temperature of 25°C (value measured at 60 rpm using a B-type viscometer "TVB-10" produced by Toki Sangyo Co., Ltd.) was approximately 4,000 mPa·s. Stability was evaluated with respect to the obtained slurry composition for an electrochemical device (slurry composition for positive electrode coating) by the previously described method. The obtained slurry composition for an electrochemical device (slurry composition for positive electrode coating) was also used to evaluate the water content of a functional layer. The results are shown in Table 1-2.

<Production of positive electrode>

Aluminum foil of 20 $\mu$m in thickness was prepared as a current collector. The slurry composition for positive electrode coating produced as described above was applied onto one side of the aluminum foil such as to have a coating weight after drying of 20 mg/cm$^2$. The coating film on the aluminum foil was dried at 80°C for 20 minutes and at 120°C for 20 minutes, and then 2 hours of heat treatment was performed at 120°C to obtain a positive electrode web. The positive electrode web was rolled by a roll press having a roll diameter of 300 mm under conditions of a load of 14 t and a pressing rate of 1,000 mm/min to thereby produce a sheet-shaped positive electrode including a positive electrode mixed material layer of 3.2 g/cm$^3$ in density on the current collector. A square of 4.6 cm $\times$ 4.6 cm was cut out from the sheet-shaped positive electrode to obtain a square positive electrode that was then used in the lithium ion secondary battery described below.

Adhesive strength (close adherence strength of functional layer (positive electrode mixed material layer) and current collector (aluminum foil)) was measured with respect to the obtained positive electrode by the previously described method.

<Production of negative electrode>

A 5 MPa pressure vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were sufficiently stirred and were then heated to 50°C to initiate polymerization. At the point at which the polymerization conversion rate reached 96%, cooling was performed to terminate the reaction and yield a mixture containing a particulate binder (SBR). The mixture containing the particulate binder was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing the target particulate binder.

Next, 100 parts of artificial graphite (average particle diameter: 15.6 $\mu$m) as a negative electrode active material, 1 part in terms of solid content of a 2% aqueous solution of a sodium salt of carboxymethyl cellulose (MAC350HC produced by Nippon Paper Industries Co., Ltd.) as a thickener, and deionized water were mixed and adjusted to a solid content concentration of 68%. Thereafter, these materials were mixed at 25°C for 60 minutes. The solid content concentration was further adjusted to 62% with deionized water and further mixing was performed at 25°C for 15 minutes. Deionized water and 1.5 parts by mass in terms of solid content of the particulate binder (SBR) were added to the mixture such that the final solid content concentration was adjusted to 52%, and a further 10 minutes of mixing was performed. The resultant mixture was subjected to a defoaming process under reduced pressure to yield a slurry composition for secondary battery negative electrode coating having good fluidity.

The slurry composition for negative electrode coating that was obtained as described above was applied onto copper foil (current collector) of 20 $\mu$m in thickness by a comma coater such as to have a thickness after drying of approximately 150 $\mu$m. The applied slurry composition was dried by conveying the copper foil inside a 60°C oven for 2 minutes at a speed of 0.5 m/min. Thereafter, heat treatment was performed at 120°C for 2 minutes to obtain a pre-pressing negative electrode web. The pre-pressing negative electrode web was rolled by roll pressing to obtain a post-pressing negative electrode having a negative electrode mixed material layer thickness of 80 $\mu$m.

(Example 11)

A polymer A, a polymer B, and a positive electrode were produced in the same way as in Example 1 with the exception that production of a slurry composition for an electrochemical device (slurry composition for separator coating), a negative electrode, a separator, and a secondary battery were carried out as described below. Each evaluation was also performed in the same way as in Example 1. The results are shown in Table 1-2.

<Production of negative electrode>

A 5 MPa pressure vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were sufficiently stirred and were then heated to 50°C to initiate polymerization. At the point at which the polymerization conversion rate reached 96%, cooling was performed to terminate the reaction and yield a mixture containing a particulate binder (SBR). The mixture containing the particulate binder was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing the target particulate binder.

Next, 100 parts of artificial graphite (average particle diameter: 15.6 $\mu$m) as a negative electrode active material, 1 part in terms of solid content of a 2% aqueous solution of a sodium salt of carboxymethyl cellulose (MAC350HC produced by Nippon Paper Industries Co., Ltd.) as a thickener, and deionized water were mixed and adjusted to a solid content concentration of 68%. Thereafter, these materials were mixed at 25°C for 60 minutes. The solid content concentration was further adjusted to 62% with deionized water and further mixing was performed at 25°C for 15 minutes. Deionized water and 1.5 parts by mass in terms of solid content of the particulate binder (SBR) were added to the mixture such that the final solid content concentration was adjusted to 52%, and a further 10 minutes of mixing was performed. The resultant mixture was subjected to a defoaming process under reduced pressure to yield a slurry composition for secondary battery negative electrode coating having good fluidity.

The slurry composition for negative electrode coating that was obtained as described above was applied onto copper foil (current collector) of 20 $\mu$m in thickness by a comma coater such as to have a thickness after drying of approximately 150 $\mu$m. The applied slurry composition was dried by conveying the copper foil inside a 60°C oven for 2 minutes at a speed of 0.5 m/min. Thereafter, heat treatment was performed at 120°C for 2 minutes to obtain a pre-pressing negative electrode web. The pre-pressing negative electrode web was rolled by roll pressing to obtain a post-pressing negative electrode having a negative electrode mixed material layer thickness of 80 $\mu$m.

<Production of slurry composition for electrochemical device (slurry composition for separator coating)>

Water, 91.3 parts of aluminum oxide (alumina; volume-average particle diameter: 0.5 $\mu$m) as non-conductive particles, and 1.0 parts of ammonium polycarboxylate (ARON A-6114 produced by Toagosei Co., Ltd.) as a dispersant were mixed. The amount of water was adjusted such that the solid content concentration was 50%. The mixture was processed using a medialess disperser so as to disperse the aluminum oxide (alumina) and obtain a slurry. The obtained slurry was mixed with 1.5 parts (in terms of solid content) of the polymer A. The added polymer A dissolved in the mixture. Next, 6.0 parts (in terms of solid content) of the polymer B and 0.2 parts of an aliphatic polyether nonionic surfactant as a wetting agent were added, and water was also added to adjust the solid content concentration to 40% and thereby obtain a slurry composition for an electrochemical device (slurry composition for separator coating). Stability of the obtained slurry composition for an electrochemical device (slurry composition for separator coating) was evaluated by the previously described method. The obtained slurry composition for an electrochemical device (slurry composition for separator coating) was also used to evaluate the water content of a functional layer. The results are shown in Table 1-2.

<Production of separator>

The produced slurry composition for an electrochemical device (slurry composition for separator coating) was sealed in a polyethylene vessel and was left at rest for 30 days. Thereafter, an impeller was inserted into the polyethylene vessel and was used to perform stirring at a rotation speed of 250 rpm. This stirring was continued for a further 30 minutes after adhered material was no longer visible at the bottom of the vessel so as to redisperse the non-conductive particles (aluminum oxide (alumina)) in the composition for a functional layer.

A single-layered polyethylene separator substrate (width: 250 mm; length: 1,000 m; thickness: 12 $\mu$m) that had been produced by a wet method was prepared. The redispersed composition for separator coating was applied onto both sides of the separator substrate by a gravure coater (application rate: 20 m/min) such as to have a thickness after drying of 2.5 $\mu$m. Next, the separator substrate with the composition for separator coating applied thereon was dried in a 50°C drying oven and was wound up to produce a separator including a functional layer formed on the separator substrate. A square of 5.2 cm × 5.2 cm was cut out from the separator and was used in the lithium ion secondary battery described below.

Adhesive strength (close adherence strength of functional layer and separator substrate) was measured with respect to the obtained separator by the previously described method.

<Production of secondary battery>

An aluminum packing case was prepared as a battery case. A square of 4.6 cm × 4.6 cm was cut out from the positive electrode produced as described above to obtain a square positive electrode. The square positive electrode was positioned inside the aluminum packing case such that the surface at the current collector side thereof was in contact with the aluminum packing case. The prepared separator was positioned on the surface at the positive electrode mixed material layer side of the square positive electrode such that the surface at the functional layer side of the separator was in contact with the square positive electrode. In addition, a square of 5 cm × 5 cm was cut out from the negative electrode produced as described above to obtain a square negative electrode. The square negative electrode was positioned on the separator such that the surface at the negative electrode mixed material layer side thereof faced toward the separator. Next, electrolyte solution (solvent: ethylene carbonate (EC)/methyl ethyl carbonate/vinylene carbonate = 68.5/30/1.5 (volume ratio); electrolyte: LiPF$_6$ of 1 M in concentration) was injected such that no air remained. The aluminum packing case was then closed by heat sealing at 150°C to tightly seal an opening of the aluminum packing case, and thereby produce a lithium ion secondary battery. Cycle characteristics were evaluated with respect to the obtained lithium ion secondary battery.

(Example 12)

A polymer A and a slurry composition for an electrochemical device were produced, a separator was prepared, and a negative electrode, a positive electrode, and a secondary battery were produced in the same way as in Example 11 with the exception that a polymer B was not used. Each evaluation was also performed in the same way as in Example 11. The results are shown in Table 1-2.

Table 1-1

| | | | Example 1 | Example 2 | Example 3 | Example 4 | Example 5 | Example 6 | Example 7 |
|---|---|---|---|---|---|---|---|---|---|
| Polymer A | Nitrogen-substituted amide group-containing monomer | Type | N-p-hydroxyphenyl acrylamide | N-p-hydroxyphenyl acrylamide | N-p-hydroxyphenyl acrylamide | N-p-hydroxyphenyl acrylamide | N-p-hydroxyphenyl acrylamide | N-isopropyl acrylamide | N-p-hydroxyphenyl acrylamide |
| | | Additive amount (mass%) | 45 | 27 | 53 | 45 | 35 | 45 | 45 |
| | Hydroxyl group-containing monomer | Type | 2-HEA | 2-HEA | 2-HEA | 2-HEA | 2-HEA | 2-HEA | 2-HEA |
| | | Additive amount (mass%) | 35 | 35 | 35 | 12 | 63 | 35 | 35 |
| | Other monomer | Type | MAA | MAA | MAA | MAA | MAA | MAA | MAA |
| | | Additive amount (mass%) | 20 | 38 | 12 | 43 | 2 | 20 | 20 |
| | Weight-average molecular weight | | 800,000 | 950,000 | 700,000 | 1,050,000 | 650,000 | 750,000 | 80,000 |
| | Additive amount per 100 parts by mass of all solid content in slurry composition (parts by mass) | | 1.5 | 1.5 | 1.5 | 1.5 | 1.5 | 1.5 | 1.5 |
| Polymer B | Monomer: Additive amount (mass%) | | ST:62.5 BD: 33.0 IA:4 2-HEA: 1 | ST:62.5 BD:33.0 IA:4 2-HEA: 1 | ST:62.5 BD:33.0 IA:4 2-HEA: 1 | ST:62.5 BD:33.0 IA:4 2-HEA: 1 | ST:62.5 BD:33.0 IA:4 2-HEA: 1 | ST:62.5 BD:33.0 IA:4 2-HEA: 1 | ST:62.5 BD:33.0 IA:4 2-HEA: 1 |
| | Additive amount per 100 parts by mass of all solid content in slurry composition (parts by mass) | | 1.5 | 1.5 | 1.5 | 1.5 | 1.5 | 1.5 | 1.5 |
| Solvent | Type | | Water | Water | Water | Water | Water | Water | Water |

(continued)

| | | Example 1 | Example 2 | Example 3 | Example 4 | Example 5 | Example 6 | Example 7 |
|---|---|---|---|---|---|---|---|---|
| Slurry | Type | Electrode slurry | Electrode slurry | Electrode slurry | Electrode slurry | Electrode slurry | Electrode slurry | Electrode slurry |
| Negative electrode/ Positive electrode/ Porous membrane | Type | Negative electrode | Negative electrode | Negative electrode | Negative electrode | Negative electrode | Negative electrode | Negative electrode |
| Electrochemical device | Type | LIB | LIB | LIB | LIB | LIB | LIB | LIB |
| Evaluation | Slurry stability | A | A | B | B | A | A | B |
| | Adhesive strength | A | A | A | A | A | A | A |
| | Water content of functional layer | A | B | A | A | B | B | A |
| | Cycle characteristics | A | B | A | A | B | B | A |

Table 1-2

| | | | Example 8 | Example 9 | Example 10 | Example 11 | Example 12 | Comparative Example 1 | Comparative Example 2 | Comparative Example 3 |
|---|---|---|---|---|---|---|---|---|---|---|
| Polymer A | Nitrogen-substituted amide group-con-taining mon-omer | Type | N-p-hydroxy-phenyl acryla-mide | N-p-hydroxy-phenyl acryla-mide | N-p-hydroxy-phenyl acryla-mide | N-p-hydroxy-phenyl acryla-mide | N-p-hydroxy-phenyl acryla-mide | Acrylamide | N-p-hydroxy-phenyl acryla-mide | N-p-hydroxy-phenyl acryla-mide |
| | | Additive amount (mass%) | 45 | 45 | 45 | 45 | 45 | 45 | 85 | 5 |
| | Hydroxyl group-con-taining mon-omer | Type | 2-HEA | 2-HEMA | 2-HEA | 2-HEA | 2-HEA | 2-EHA | 2-EHA | 2-EHA |
| | | Additive amount (mass%) | 35 | 35 | 35 | 35 | 35 | 35 | 10 | 92 |
| | Other monomer | Type | MAA | MAA | MAA | MAA | MAA | MAA | ST | ST |
| | | Additive amount (mass%) | 20 | 20 | 20 | 20 | 20 | 20 | 5 | 3 |
| | Weight-average molecular weight | | 8,500,000 | 820,000 | 800,000 | 800,000 | 800,000 | 650,000 | 880,000 | 580,000 |
| | Additive amount per 100 parts by mass of all solid content in slurry composition (parts by mass) | | 1.5 | 1.5 | 1.5 | 1.5 | 1.5 | 1.5 | 1.5 | 1.5 |
| Polymer B | Monomer: Additive amount (mass%) | | ST:62.5 BD: 33.0 IA:4 2-HEA: 1 | ST:62.5 BD:33.0 IA:4 2-HEA: 1 | BD:65 AN: 35 | ST:62.5 BD:33.0 IA:4 2-HEA: 1 | - | ST:62.5 BD:33.0 IA:4 2-HEA: 1 | ST:62.5 BD:33.0 IA:4 2-HEA: 1 | ST:62.5 BD:33.0 IA:4 2-HEA: 1 |
| | Additive amount per 100 parts by mass of all solid content in slurry composition (parts by mass) | | 1.5 | 1.5 | 0.5 | 6 | - | 1.5 | 1.5 | 1.5 |
| Solvent | Type | | Water | Water | NMP | Water | Water | Water | Water | Water |

(continued)

| | | Example 8 | Example 9 | Example 10 | Example 11 | Example 12 | Comparative Example 1 | Comparative Example 2 | Comparative Example 3 |
|---|---|---|---|---|---|---|---|---|---|
| Slurry | Type | Electrode slurry | Electrode slurry | Electrode slurry | Porous membrane slurry | Porous membrane slurry | Electrode slurry | Electrode slurry | Electrode slurry |
| Negative electrode/ Positive electrode/ Porous membrane | Type | Negative electrode | Negative electrode | Positive electrode | Porous membrane | Porous membrane | Negative electrode | Negative electrode | Negative electrode |
| Electrochemical device | Type | LIB | LIB | LIB | LIB | LIB | LIB | LIB | LIB |
| Evaluation | Slurry stability | A | A | A | A | A | B | C | B |
| | Adhesive strength | A | A | A | A | B | B | B | B |
| | Water content of functional layer | B | A | A | A | A | C | B | D |
| | Cycle characteristics | B | A | A | A | A | D | D | D |

EP 3 691 004 A1

Note that in Tables 1-1 and 1-2: "2-HEA" indicates "2-hydroxyethyl acrylate"; "2-HEMA" indicates "2-hydroxyethyl methacrylate"; "2-EHA" indicates "2-ethylhexyl acrylate"; "MAA" indicates "methacrylic acid"; "ST" indicates "styrene"; "BD" indicates "butadiene"; "IA" indicates "itaconic acid"; "AN" indicates "acrylonitrile"; and "LIB" indicates "lithium ion battery".

It can be seen from Examples 1 to 12 and Comparative Examples 1 to 3 in Tables 1-1 and 1-2, presented above, that by using a binder composition for an electrochemical device that contains a solvent and a polymer A including a specific amount of a nitrogen-substituted amide group-containing monomer unit and a specific amount of a hydroxyl group-containing monomer unit, it is possible to improve cycle characteristics of an electrochemical device including a functional layer that is formed using a produced slurry composition for an electrochemical device.

INDUSTRIAL APPLICABILITY

According to the present disclosure, it is possible to provide a slurry composition for an electrochemical device with which it is possible to form a functional layer for an electrochemical device that can cause an electrochemical device to display excellent cycle characteristics, and also to provide a binder composition for an electrochemical device that can be used to produce this slurry composition.

Moreover, according to the present disclosure, it is possible to provide a functional layer for an electrochemical device that can cause an electrochemical device to display excellent cycle characteristics, and also to provide an electrochemical device including this functional layer for an electrochemical device.

**Claims**

1.   A binder composition for an electrochemical device comprising a polymer A and a solvent, wherein
     the polymer A includes a nitrogen-substituted amide group-containing monomer unit and a hydroxyl group-containing monomer unit,
     content of the nitrogen-substituted amide group-containing monomer unit in the polymer A is not less than 10 mass% and not more than 80 mass%, and
     content of the hydroxyl group-containing monomer unit in the polymer A is not less than 10 mass% and not more than 70 mass%.

2.   The binder composition for an electrochemical device according to claim 1, wherein the polymer A has a weight-average molecular weight of not less than 50,000 and not more than 5,000,000.

3.   The binder composition for an electrochemical device according to claim 1 or 2, wherein a substituent of the nitrogen-substituted amide group-containing monomer unit includes a cyclic structure.

4.   The binder composition for an electrochemical device according to any one of claims 1 to 3, further comprising a polymer B, wherein
     the polymer B includes either or both of an aliphatic conjugated diene monomer unit and a linear alkylene structural unit.

5.   A slurry composition for an electrochemical device comprising the binder composition for an electrochemical device according to any one of claims 1 to 4.

6.   The slurry composition for an electrochemical device according to claim 5, further comprising an electrode active material.

7.   A functional layer for an electrochemical device formed using the slurry composition for an electrochemical device according to claim 5 or 6.

8.   An electrochemical device comprising a positive electrode, a negative electrode, a separator, and an electrolyte solution, wherein
     at least one of the positive electrode, the negative electrode, and the separator includes the functional layer for an electrochemical device according to claim 7.

## INTERNATIONAL SEARCH REPORT

International application No.

PCT/JP2018/034911

### A. CLASSIFICATION OF SUBJECT MATTER

Int. Cl. H01M4/62(2006.01)i, C08F220/56(2006.01)i, H01G11/38(2013.01)i, H01M2/16(2006.01)i, H01M4/13(2010.01)i, H01M4/139(2010.01)i, H01M10/0566(2010.01)i

According to International Patent Classification (IPC) or to both national classification and IPC

### B. FIELDS SEARCHED

Minimum documentation searched (classification system followed by classification symbols)

Int. Cl. H01M4/62, C08F220/56, H01G11/38, H01M2/16, H01M4/13, H01M4/139, H01M10/0566

Documentation searched other than minimum documentation to the extent that such documents are included in the fields searched

Published examined utility model applications of Japan 1922–1996
Published unexamined utility model applications of Japan 1971–2018
Registered utility model specifications of Japan 1996–2018
Published registered utility model applications of Japan 1994–2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2007-35557 A (NITTO DENKO CORP.) 08 February | 1-3, 5-8 |
| Y | 2007, claims, examples, paragraphs [0014]-[0027] (Family: none) | 4 |
| X | JP 2013-110108 A (TOYO INK SC HOLDINGS CO., LTD.) | 1-3, 5-8 |
| Y | 06 June 2013, claims, examples (Family: none) | 4 |
| Y | JP 2015-26595 A (TOYO INK SC HOLDINGS CO., LTD.) 05 February 2015, claims, examples & WO 2014/171415 A1 & EP 2988351 A1, claims, examples & CN 105144435 A & KR 10-2015-0144769 A | 4 |
| Y | WO 2017/141791 A1 (NIPPON ZEON CO., LTD.) 24 August 2017, claims, examples (Family: none) | 4 |

☒ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07.11.2018 | 20.11.2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## INTERNATIONAL SEARCH REPORT

| International application No. |
| --- |
| PCT/JP2018/034911 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | WO 2017/056404 A1 (NIPPON ZEON CO., LTD.) 06 April 2017, claims, examples & EP 3358659 A1, claims, examples & CN 107925089 A & KR 10-2018-0054592 A | 4 |

Form PCT/ISA/210 (continuation of second sheet) (January 2015)

**EP 3 691 004 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012151108 A
- JP 2015195114 A
- WO 2012115096 A1
- JP 2013145763 A
- JP 2012204303 A